# EUROPÄISCHE PATENTANMELDUNG

(11) **EP 3 334 125 A1**
(43) Veröffentlichungstag der Anmeldung: **13.06.2018**
(21) Anmeldenummer: 17200409.5
(22) Anmeldetag: 07.11.2017
(51) Int. Cl.: H04L 29/08, G05B 19/406

(54) **ÜBERWACHUNGSSYSTEM FÜR EINE ECHTZEIT-ÜBERWACHUNG EINER WERKZEUGMASCHINE SOWIE WERKZEUGMASCHINE UND SENDE- UND EMPFANGSMODUL HIERFÜR**

(30) Priorität: 06.12.2016 DE 202016106787 U
(71) Anmelder: KEURO Besitz GmbH & Co. EDV-Dienstleistungs KG, 77855 Achern (DE)
(72) Erfinder: Stolzer, Armin, 76530 Baden-Baden (DE); Krebber, Sönke Florian, 76530 Baden-Baden (DE); Schorpp, Andreas, 77933 Lahr-Reichenbach (DE)
(74) Vertreter: Lemcke, Brommer & Partner Patentanwälte Partnerschaft mbB

(57) **Zusammenfassung**

Die vorliegende Erfindung betrifft ein Überwachungssystem für eine Echtzeit-Überwachung einer Werkzeugmaschine 1. Dieses umfasst ein tragbares, für eine drahtlose Kommunikation geeignetes Datenverarbeitungsgerät 7 und ein Sende- und Empfangsmodul 4, das mit einer Schnittstelle einer elektronischen Maschinensteuerung 2 der Werkzeugmaschine 1 verbunden ist, um bestimmte Zustandsparameter der Werkzeugmaschine 1 auszulesen.

Das Datenverarbeitungsgerät stellt eine Kommunikationsverbindung mit einem Intranet 5 her welches eine drahtlose Kommunikationsverbindung bereitstellt und/oder ein Kommunikationsnetzwerk erzeugt, wobei das Sende- und Empfangsmodul 4 einen App-Server oder einen Webserver beinhaltet, der die aus der elektronischen Maschinensteuerung 2 ausgelesenen Parameter für ein Anwendungsprogramm (App) oder für einen Webbrowser des tragbaren Datenverarbeitungsgeräts 7 verfügbar und darstellbar macht.

## Beschreibung

Die Erfindung betrifft ein Überwachungssystem für eine Echtzeit-Überwachung einer Werkzeugmaschine nach dem Oberbegriff des Anspruchs 1, eine Werkzeugmaschine nach dem Oberbegriff des Anspruchs 10 sowie ein Sende- und Empfangsmodul nach dem Oberbegriff des Anspruchs 13 für den Einsatz in einem Überwachungssystem der vorliegenden Art.

Ein solches Überwachungssystem umfasst ein tragbares, für eine drahtlose Kommunikation geeignetes Datenverarbeitungsgerät und ein Sende- und Empfangsmodul, das mit einer Schnittstelle einer elektronischen Maschinensteuerung der Werkzeugmaschine verbunden ist, um bestimmte Zustandsparameter der Werkzeugmaschine auszulesen. Das Sende- und Empfangsmodul stellt eine Kommunikationsverbindung mit einem Intranet her und/oder es stellt eine drahtlose Kommunikationsverbindung mit dem tragbaren Datenverarbeitungsgerät bereit und/oder es erzeugt ein drahtloses Kommunikationsnetzwerk.

Eine Werkzeugmaschine der vorliegenden Art ist mit einer elektronischen Maschinensteuerung versehen und umfasst oder steht in Wirkverbindung mit einem Sende- und Empfangsmodul, das mit einer Schnittstelle der Maschinensteuerung verbunden ist, um bestimmte Zustandsparameter und Statisikauswertungen der Werkzeugmaschine auszulesen.

Moderne Werkzeugmaschinen, wie beispielsweise Sägemaschinen, Fräsmaschinen und dergleichen Maschinen zum Bearbeiten von insbesondere Metallen laufen üblicherweise im automatisierten Betrieb, d.h. eine elektronische Maschinensteuerung der Werkzeugmaschine arbeitet selbständig ein Bearbeitungsprogramm ab, ohne dass es notwendig wäre, dass ein Bediener den Bearbeitungsvorgang überwacht oder gar selbst steuert. Um Produktionsstillstände zu vermeiden, ist es bekannt, dass solche automatisierten Werkzeugmaschinen bei einer Störung, die zu einem Produktionsstillstand führen kann, eine Störungsmeldung absetzen, die mittels eines Sende- und Empfangsmoduls, das beispielsweise von einem Telekommunikationsdienstleister betrieben wird, an ein tragbares, für eine drahtlose Kommunikation geeignetes Datenverarbeitungsgerät weitergegeben wird. Dies kann beispielsweise ein Pager, Computer, Tablet oder ein Mobiltelefon sein, so dass bei einer Störung ein Techniker und/oder ein Betriebsleiter direkt über die Störung informiert wird und entsprechende Maßnahmen einleiten kann, um die Störung zu beheben.

Nun ist es jedoch für den Betriebsleiter oder eine sonstige verantwortliche Person wünschenswert, dass die wichtigsten Betriebsparameter einer Werkzeugmaschine, ohne sich zu dieser hin begeben zu müssen, im Echtzeit abgerufen bzw. überwacht werden können, um einen Überblick über die Produktion zu behalten und gegebenenfalls Optimierungsbedarf auszumachen. Mit zunehmendem Automatisierungsgrad wird es auch für den Maschinenbediener immer wichtiger, die aktuellen Zustandsparameter einer oder mehrerer Werkzeugmaschinen in Echtzeit auslesen bzw. überwachen zu können, auch wenn er nicht neben der Werkzeugmaschine steht, um die Zustandsparameter direkt von dort auszulesen.

Grundsätzlich ist eine solche Überwachung von Zustandsparametern über ein Fernwartungssystem möglich; jedoch ist der Zugang zu einem Fernwartungssystem in der Regel auf spezialisierte Techniker des Maschinenherstellers beschränkt, und aus Sicherheitsgründen sind mehrere Sicherheitseinrichtungen zu durchlaufen, bevor einem Fernwartungscomputer der Zugang zur Maschinensteuerung gewährt wird. Ein solches Fernwartungssystem kommt daher für die Zwecke einer Echtzeit-Überwachung durch einen Maschinenbediener und/oder einen Betriebsverantwortlichen nicht in Betracht.

Der vorliegenden Erfindung liegt daher die Aufgabe zugrunde, ein Überwachungssystem für eine Echtzeit-Überwachung einer Werkzeugmaschine, ein Sende- und Empfangsmodul hierfür sowie eine Werkzeugmaschine mit einem solchen Sende- und Empfangsmodul vorzuschlagen, das bzw. die es ermöglicht, dass verantwortliche Personen, beispielsweise ein Maschinenbediener oder ein Betriebsleiter, in Echtzeit an einem tragbaren Datenverarbeitungsgerät Informationen über relevante Zustandsparameter erhalten, um gegebenenfalls notwendige Maßnahmen zu veranlassen oder zu ergreifen, mit denen der Bearbeitungsvorgang optimiert werden kann, oder um die optimale Arbeitsweise und Auslastung von Maschinengruppen oder des gesamten Betriebs zu überwachen.

Gelöst ist diese Aufgabe durch ein Überwachungssystem mit den Merkmalen des Anspruchs 1, eine Werkzeugmaschine mit den Merkmalen des Anspruchs 10 sowie ein Sende- und Empfangsmodul mit den Merkmalen des Anspruchs 13. Bevorzugte Ausgestaltungen des erfindungsgemäßen Überwachungssystems finden sich in den Ansprüchen 2 bis 9, vorteilhafte Weiterbildungen der erfindungsgemäßen Werkzeugmaschine sind in den Ansprüchen 11 und 12 niedergelegt; bevorzugte Weiterbildungen des erfindungsgemäßen Sende- und Empfangsmoduls sind in den Ansprüchen 14 und 15 definiert.

Das erfindungsgemäße Sende- und Empfangsmodul, das auch das erfindungsgemäße Überwachungssystem und die erfindungsgemäße Werkzeugmaschine kennzeichnet, beinhaltet einen App-Server oder einen Webserver, der die aus der elektronischen Maschinensteuerung ausgelesenen Parameter für ein Anwendungsprogramm (App) oder für einen Webbrowser des tragbaren Datenverarbeitungsgeräts verfügbar und darstellbar macht.

Ein großer Vorteil der Erfindung liegt somit darin, als tragbares, für eine drahtlose Kommunikation geeignetes Datenverarbeitungsgerät ein handelsübliches Smartphone oder einen Tabletcomputer zu verwenden, wobei ein Smartphone ohnehin von den meisten Personen, die das Überwachungssystem nutzen, mit sich geführt wird.

Wenn das erfindungsgemäße Sende- und Empfangsmodul einen Webserver beinhaltet, werden die aus der elektronischen Maschinensteuerung ausgelesenen Parameter plattformübergreifend verfügbar und darstellbar gemacht; tragbare Datenverarbeitungsgeräte, wie Smartphones und Tabletcomputer verfügen in aller Regel über einen installierten Webbrowser mit dessen Hilfe die Darstellung der vom Webserver verfügbar gemachten Informationen über bestimmte Zustandsparameter der Werkzeugmaschine erfolgt. Je nachdem, ob das Sende- und Empfangsmodul die ausgelesenen Zustandsparameter über ein Intranet bereitstellt oder ein Kommunikationsnetzwerk erzeugt bzw. eine direkte drahtlose Kommunikationsverbindung mit dem tragbaren Datenverarbeitungsgerät ermöglicht, reicht es aus, am tragbaren Datenverarbeitungsgerät eine direkte oder via Intranet erfolgende Verbindung mit dem Sende- und Empfangsmodul anzufordern oder eine solche Verbindung direkt herzustellen, um sich die interessierenden Zustandsparameter der Werkzeugmaschine anzeigen zu lassen. Diese erfolgt dann im Rahmen des geräteeigenen Webbrowsers.

Soweit das erfindungsgemäße Sende- und Empfangsmodul mit einem App-Server ausgestattet ist, ist es notwendig, dass auf dem tragbaren Datenverarbeitungsgerät ein spezielles Anwendungsprogramm (App) installiert wird, mit dem die vom App-Server des Sende- und Empfangsmoduls bereitgestellten Informationen gelesen und dargestellt werden können. Wie dies bei Mobilgeräten, wie Smartphones und Tabletcomputer üblich ist, ist das Anwendungsprogramm beim Hersteller des Geräts und/oder des Betriebssystems herunterladbar (App-Store) und unkompliziert installierbar. Diese Version der vorliegenden Erfindung bietet den Vorteil, dass beispielsweise eine anonyme Abfrage der Zustandsparameter-Informationen ausgeschlossen werden kann, was die Zugriffssicherheit erhöht.

Mit der vorliegenden Erfindung können Anwender ganz einfach mit ihrem Smartphone oder Tabletcomputer jederzeit und in einem gewünschten Umkreis, beispielsweise auf einem Firmengelände, den Status oder den Verlauf von relevanten Zustandsparametern im Betrieb einer oder mehrerer Werkzeugmaschinen abfragen, überwachen und im Bedarfsfall besonders schnell reagieren.

Wenn das erfindungsgemäße Sende- und Empfangsmodul die ausgelesenen Zustandsparameter der Werkzeugmaschine mittels Webserver bereitstellt, kann es dennoch vorteilhaft sein, das tragbare Datenverarbeitungsgerät mit einem auswählbaren Anwendungsprogramm (App) auszustatten, welches die vom Webserver des Sende- und Empfangsmoduls bereitgestellten Informationen mit Hilfe eines vorinstallierten Webbrowsers in einer spezifischen Maske grafisch darstellt. Somit hat der Anwender, der das tragbare Datenverarbeitungsgerät mit sich führt, nicht den Eindruck, via Internet auf die gewünschten Informationen zuzugreifen. Vielmehr geht er davon aus, dass eine spezielle App die Daten für ihn abfragt und darstellt, auch wenn es sich technisch um eine HTML-Seite handelt, die von dem Anwendungsprogramm dargestellt wird.

Nach einer weiteren bevorzugten Ausgestaltung der vorliegenden Erfindung kann das Sende- und Empfangsmodul solcherart mit der Schnittstelle der elektronischen Maschinensteuerung verbunden sein, dass zusätzlich zum Auslesen von Zustandsparametern auch die Übermittlung von Steuerbefehlen an die Maschinensteuerung möglich ist. Soweit ein solches Sende- und Empfangsmodul im Rahmen eines erfindungsgemäßen Überwachungssystems verwendet wird, ist dann das tragbare Datenverarbeitungsgerät zweckmäßigerweise mit einem auswählbaren Anwendungsprogramm ausgestattet, das Steuerbefehle von einem Anwender, der diese am tragbaren Datenverarbeitungsgerät eingibt, an das Sende- und Empfangsmodul übermittelt. Von diesem werden die Steuerbefehle dann an die elektronische Maschinensteuerung weitgegeben.

Mit dieser Weiterbildung der vorliegenden Erfindung können sich Anwender, wie insbesondere ein Maschinenbediener oder ein Betriebsverantwortlicher, nicht nur in Echtzeit über den aktuellen Status und weitere Zustandsparameter einer oder mehrerer Werkzeugmaschinen informieren, sondern auch sofort reagieren, indem Steuerbefehle an eine bestimmte Werkzeugmaschine übermittelt werden. Hierbei ist es möglich, nur bestimmte Steuerbefehle zuzulassen, wie beispielsweise eine Notabschaltung oder eine Reduzierung der Arbeitsgeschwindigkeit, um bei erkannten Gefahrsituationen sofort reagieren zu können, ohne sich im Übrigen in den Maschinenbetrieb einzumischen. Gegebenenfalls kann die Übermittlung von Steuerbefehlen jedoch auch so weit gehen, dass eine regelrechte Fernbedienung der Werkzeugmaschine möglich ist.

Das erfindungsgemäße Sende- und Empfangsmodul kann als separate Vorrichtung ausgebildet sein; im Rahmen der vorliegenden Erfindung kann es jedoch auch bevorzugt sein, das Sende- und Empfangsmodul als Teil der elektronischen Maschinensteuerung oder als in die Maschinensteuerung integrierter virtueller Rechner auszuführen, so dass eine Werkzeugmaschine auch ohne Anbindung an ein Intranet dazu geeignet ist, erfindungsgemäß überwacht zu werden. Das erfindungsgemäße Sende- und Empfangsmodul kann andererseits auch in ein Intranet eines Betriebs integriert werden und gegebenenfalls auf einem Rechner dieses Intranets als virtueller Rechner installiert sein.

Unabhängig von der konkreten Ausgestaltung des erfindungsgemäßen Sende- und Empfangsmoduls kann dieses bedarfsweise mit Schnittstellen von elektronischen Maschinensteuerungen mehrerer Werkzeugmaschinen verbunden sein.

Besonders bevorzugt sind bei einem erfindungsgemäßen Überwachungssystem das Sende- und Empfangsmodul und das tragbare Datenverarbeitungsgerät so zusammenwirkend ausgestaltet, dass im Falle einer Störung einer Werkzeugmaschine, die mit dem Sende- und Empfangsmodul verbunden ist, eine Push-Nachricht am tragbaren Datenverarbeitungsgerät ausgelöst wird. Es handelt sich also um eine Alarmfunktion, die beispielsweise einen Maschinenbediener oder einen Betriebsverantwortlichen unmittelbar alarmiert, auch wenn sich dieser nicht in Sicht- und Hörweite der betroffenen Werkzeugmaschine und deren visuellen und/oder hörbaren Alarmsystemen befindet.

Eine weitere vorteilhafte Weiterbildung eines Überwachungssystems nach der vorliegenden Erfindung besteht darin, das erfindungsgemäße Sende- und Empfangsmodul mit einem Webserver auszustatten und an das Internet anzuschließen sowie so zu programmieren, dass der Webserver Anfragen an eine vorgegebene Internetadresse beantwortet. Auf diese Art und Weise ist es möglich, via Internet von praktisch überall, auch aus großer Entfernung bestimmte Zustandsparameter einer oder mehrerer Werkzeugmaschinen abzufragen. Hierfür muss sich der Anwender dann also nicht mehr innerhalb der Funkstrecke des Sende- und Empfangsmoduls bzw. eines Intranets befinden.

Um auch Steuerbefehle von einem Anwender an die Maschinensteuerung via Internet über ein erfindungsgemäßes Sende- und Empfangsmodul zu leiten, kann der Webserver des Sende- und Empfangsmoduls so programmiert sein, dass er auf eine Anfrage an die vorgegebene Internetadresse eine Portweiterleitung zur elektronischen Maschinensteuerung einrichtet, um Steuerbefehle an die Maschinensteuerung weiterzuleiten. Wie auch für eine Abfrage von Zustandsparametern, ist es für das Einrichten der Portweiterleitung zweckmäßig, wenn dies nur nach einer Authentifizierung des Anwenders geschieht.

Um die Sicherheit bei einem Zugriff über das Internet zu erhöhen, ist es schließlich bevorzugt, wenn der Webserver des Sende- und Empfangsmoduls so programmiert ist, dass er auf Anfragen über das Internet nur Informationen über Zustandsparameter an das anfragende tragbare Datenverarbeitungsgerät übermittelt, während er bei einem direkten drahtlosen Kontakt oder einer Anfrage über ein Intranet zusätzlich auch Steuerbefehle vom anfragenden Datenverarbeitungsgerät entgegennimmt und an die elektronische Maschinensteuerung weiterleitet. Dies schließt die Gefahr aus, dass via Internet eine unberechtigte Manipulation der entsprechenden Werkzeugmaschine erfolgen kann.

Ein Ausführungsbeispiel für die vorliegende Erfindung wird im Folgenden anhand der beigefügten Zeichnungen näher beschrieben und erläutert. Es zeigen:
- Figur 1: eine schematische Darstellung eines erfindungsgemäß ausgebildeten Überwachungssystems für eine Sägemaschine;
- Figur 2: ein Beispiel für eine Anzeige auf dem tragbaren Datenverarbeitungsgerät aus Figur 1.

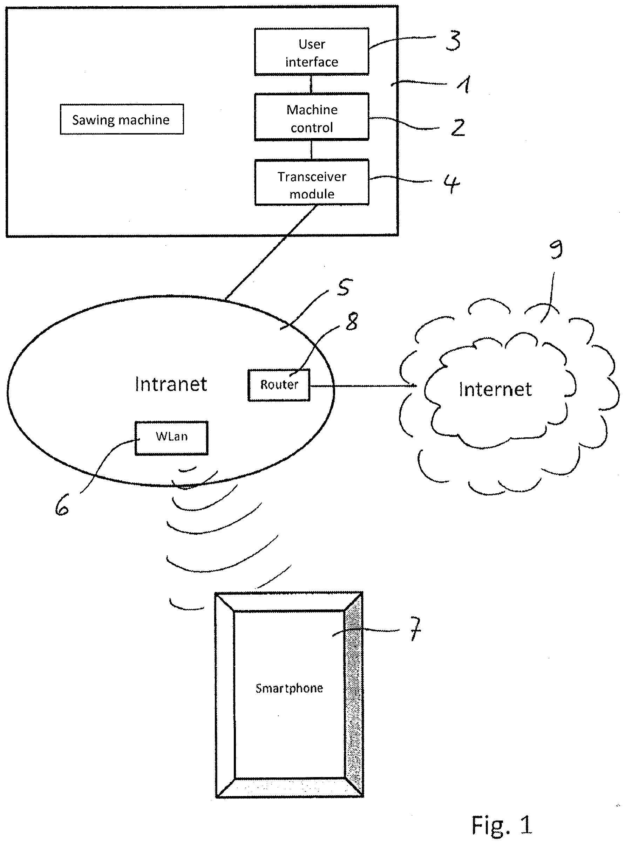

Figur 1 ist eine Schemazeichnung für ein erfindungsgemäß ausgebildetes Überwachungssystem zur Echtzeit-Überwachung einer Werkzeugmaschine 1, hier eine Sägemaschine der KASTO Maschinenbau GmbH (KASTO ist eine eingetragene Marke dieses Unternehmens). Diese Sägemaschine ist mit einer elektronischen Maschinensteuerung 2 versehen, welche über eine Bedienerschnittstelle 3 verfügt, um die Sägemaschine bedienen und vor Ort überwachen zu können. Diese Bedienerschnittstelle 3 ist hier ein berührungsempfindliches Display.

Die als Sägemaschine ausgebildete Werkzeugmaschine 1 verfügt außerdem über ein Sende- und Empfangsmodul 4, das mit der Maschinensteuerung verbunden ist, um von dieser Zustandsparameter auszulesen. Physikalisch ist das Sende- und Empfangsmodul 4 als virtueller Rechner im Rechner ausgebildet, auf dem die Maschinensteuerung 2 läuft.

Das Sende- und Empfangsmodul 4 ist mit einem Intranet 5 eines metallverarbeitenden Betriebs verbunden, das mehrere Abteilungen des Betriebs miteinander vernetzt. Das Sende- und Empfangsmodul 4 sorgt dafür, dass die Werkzeugmaschine 1 ein Teilnehmer des Intranets 5 wird. Das Intranet 5 umfasst auch eine Basisstation (Wireless Access Point), die ein WLAN 6 aufspannt, welches auf dem Betriebsgelände ein drahtloses Einwählen in das Intranet 5 ermöglicht. Dies erfolgt mit einem tragbaren, für eine drahtlose Kommunikation geeigneten Datenverarbeitungsgerät 7, das im vorliegenden Ausführungsbeispiel ein handelsübliches Smartphone ist.

Das Intranet 5 des vorliegenden Ausführungsbeispiels verfügt außerdem über einen Router 8, über den das Intranet 5 mit dem Internet 9 verbindbar ist. Das als Smartphone ausgebildete tragbare Datenverarbeitungsgerät 7 kann sich dann auch via Internet 9 und Router 8 in das Intranet 5 einwählen.

Das Sende- und Empfangsmodul 4 der Werkzeugmaschine 1 liest bestimmte Zustandsparameter aus der elektronischen Maschinensteuerung 2 aus und stellt sie im Intranet 5 zur Verfügung, indem sie sie mittels eines Webservers für einen Webbrowser lesbar und darstellbar macht, vorzugsweise mittels des HTML 5-Standards.

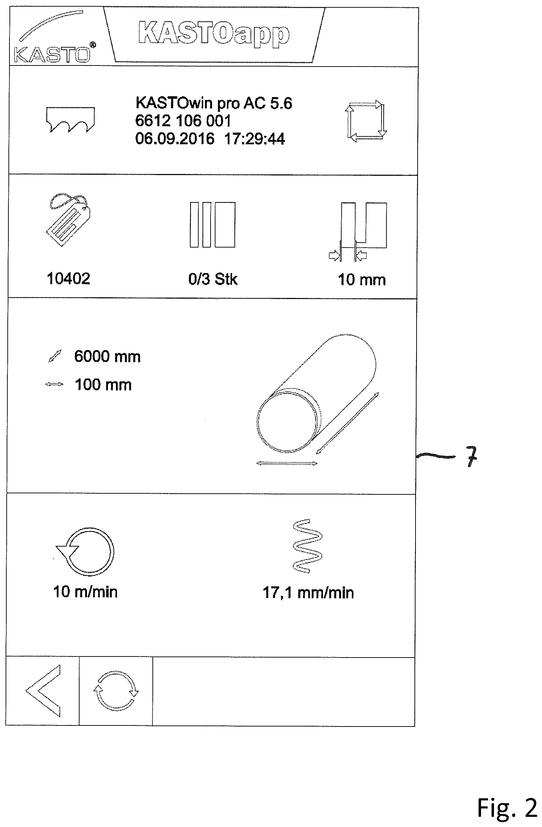

Wenn sich ein Anwender mit seinem Smartphone per WLAN in das Intranet 5 einwählt, kann das Smartphone Kontakt mit dem Sende- und Empfangsmodul 4 aufnehmen und die dort bereitgestellten Informationen für den Anwender darstellen. Ein Beispiel für solch eine Darstellung zeigt Figur 2:
In der ersten Zeile wird darüber informiert, um welche Werkzeugmaschine 1 es sich handelt: Vorliegend ist dies die Sägemaschine KASTOwin pro AC 5.6, deren Seriennummer neben dem aktuellen Datum und der aktuellen Uhrzeit ebenfalls angezeigt wird. Über ein rechts dargestelltes Symbol wird dem Anwender signalisiert, dass diese Werkzeugmaschine 1 momentan in Betrieb ist und im Automatik-Modus läuft.

In der zweiten Zeile erkennt der Anwender, welcher Auftrag von der betreffenden Sägemaschine aktuell bearbeitet wird, wie viele Teilstücke abgetrennt werden sollen und wie viele bereits abgetrennt sind, sowie die Abschnittlänge des aktuell gesägten Abschnitts.

Die dritte Zeile bietet dem Anwender Informationen über das aktuell in der Sägemaschine bearbeitet Werkstück, hier dessen Länge und Breite.

Die vierte Zeile informiert den Anwender über die Umlaufgeschwindigkeit des Sägebands sowie die Geschwindigkeit der Schnittbewegung, also des Sägefortschritts. Vorliegend läuft das Sägeband mit einer Geschwindigkeit von 10 m/min um und dringt mit einer Geschwindigkeit von 17,1 mm/min in das Werkstück ein.

Die letzte Zeile enthält Schaltflächen zur Navigation innerhalb des Anwendungsprogramms, das vorliegend als "KASTOapp" bezeichnet ist.

Wenn gewünscht, kann das Sende- und Empfangsmodul 4 über den Router 8 des Intranets 5 an das Internet angeschlossen sein, so dass ein Anwender mit seinem Smartphone auch von außerhalb des Betriebsgeländes via Internet auf das Sende- und Empfangsmodul 4 zugreifen kann, um sich die in Figur 2 dargestellten und vom Sende- und Empfangsmodul 4 aus der elektronischen Maschinensteuerung 2 ausgelesenen Statusinformationen anzeigen zu lassen.

Wahlweise kann im vorliegenden Ausführungsbeispiel vorgesehen sein, dass das Sende- und Empfangsmodul 4 nicht nur Informationen aus der elektronischen Maschinensteuerung 2 ausliest, sondern auch Steuerbefehle an diese abgeben kann. Somit kann ein Anwender von seinem tragbaren Datenverarbeitungsgerät 7, also in der Regel von seinem eigenen Smartphone bestimmte Steuerbefehle an die Werkzeugmaschine 1 übermitteln, und zwar unabhängig davon, wo er sich auf dem Betriebsgelände befindet. Dies kann beispielsweise sehr vorteilhaft sein, wenn hierdurch eine Sicherheitsabschaltung der Werkzeugmaschine 1 durchgeführt werden soll, wenn der Bediener anhand der dargestellten Informationen über bestimmte Zustandsparameter erkennt, dass Gefahr im Verzug ist.

Um hierbei Manipulationen aus dem Internet auszuschließen, kann vorgesehen sein, dass das Sende- und Empfangsmodul 4 nur dann Steuerbefehle entgegennimmt, wenn diese über das Intranet 5 kommen.

Soweit ein Betrieb kein Intranet 5 besitzt oder es nicht gewünscht ist, dass die Werkzeugmaschine 1 Teil des Intranets 5 wird, kann alternativ auch ein Sende- und Empfangsmodul 4 vorgesehen sein, das direkt eine drahtlose Verbindung mit dem tragbaren Datenverarbeitungsgerät 7 herstellt bzw. als Basisstation (Wireless Access Point) für ein eigenes WLAN der Werkzeugmaschine 1 agiert. Auch dann kann das Sende- und Empfangsmodul 4 mit dem Internet 9 verbunden sein, so dass die oben beschriebenen Funktionalitäten realisiert werden können.

## Patentansprüche

1. Überwachungssystem für eine Echtzeit-Überwachung einer Werkzeugmaschine (1), umfassend ein tragbares, für eine drahtlose Kommunikation geeignetes Datenverarbeitungsgerät (7) und ein Sende- und Empfangsmodul (4), das mit einer Schnittstelle einer elektronischen Maschinensteuerung (2) der Werkzeugmaschine (1) verbunden ist, um bestimmte Zustandsparameter der Werkzeugmaschine (1) auszulesen, und das eine Kommunikationsverbindung mit einem Intranet (5) herstellt, eine drahtlose Kommunikationsverbindung bereitstellt und/oder ein Kommunikationsnetzwerk erzeugt,
**dadurch gekennzeichnet,**
**dass** das Sende- und Empfangsmodul (4) einen App-Server oder einen Webserver beinhaltet, der die aus der elektronischen Maschinensteuerung (2) ausgelesenen Parameter für ein Anwendungsprogramm (App) oder für einen Webbrowser des tragbaren Datenverarbeitungsgeräts (7) verfügbar und darstellbar macht.

2. Überwachungssystem nach Anspruch 1, wobei das tragbare Datenverarbeitungsgerät (7) mit einem auswählbaren Anwendungsprogramm ausgestattet ist, welches die vom Webserver des Sende- und Empfangsmoduls (4) bereitgestellten Informationen mit Hilfe eines vorinstallierten Webbrowsers in einer spezifischen Maske grafisch darstellt.

3. Überwachungssystem nach einem der Ansprüche 1 oder 2, wobei das Sende- und Empfangsmodul (4) solcherart mit der Schnittstelle der elektronischen Maschinensteuerung (2) verbunden ist, dass zusätzlich zum Auslesen von Zustandsparametern die Übermittlung von Steuerbefehlen an die Maschinensteuerung (2) möglich ist, und wobei das tragbare Datenverarbeitungsgerät (7) mit einem auswählbaren Anwendungsprogramm ausgestattet ist, welches Steuerbefehle von einem Anwender an das Sende- und Empfangsmodul (4) übermittelt.

4. Überwachungssystem nach einem der Ansprüche 1 bis 3, wobei das Sende- und Empfangsmodul (4) als Teil der elektronischen Maschinensteuerung (2) oder als in die Maschinensteuerung (2) integrierter virtueller Rechner ausgeführt ist.

5. Überwachungssystem nach einem der Ansprüche 1 bis 4, wobei das Sende- und Empfangsmodul (4) mit Schnittstellen von elektronischen Maschinensteuerungen (2) mehrerer Werkzeugmaschinen (1) verbunden ist.

6. Überwachungssystem nach einem der Ansprüche 1 bis 5, wobei das Sende- und Empfangsmodul (4) und das tragbare Datenverarbeitungsgerät (7) so zusammenwirkend ausgestaltet sind, dass im Falle einer Störung mindestens einer mit dem Sende- und Empfangsmodul (4) verbundenen Werkzeugmaschine (1) eine Push-Nachricht am tragbaren Datenverarbeitungsgerät (7) ausgelöst wird.

7. Überwachungssystem nach einem der Ansprüche 1 bis 6, wobei der Webserver des Sende- und Empfangsmoduls (4) an das Internet (9) angeschlossen und so programmiert ist, dass er Anfragen an eine vorgegebene Internetadresse beantwortet.

8. Überwachungssystem nach Anspruch 7, wobei der Webserver des Sende- und Empfangsmoduls (4) so programmiert ist, dass er auf eine Anfrage an die vorgegebene Internetadresse eine Portweiterleitung zur elektronischen Maschinensteuerung (2) einrichtet, um Steuerbefehle an die Maschinensteuerung (2) weiterzuleiten.

9. Überwachungssystem nach Anspruch 7, wobei der Webserver des Sende- und Empfangsmoduls (4) so programmiert ist, dass er auf Anfragen über das Internet (9) nur Informationen über Zustandsparameter an das anfragende tragbare Datenverarbeitungsgerät (7) übermittelt, während er bei einem direkten drahtlosen Kontakt oder einer Anfrage über ein Intranet (5) zusätzlich auch Steuerbefehle vom anfragenden tragbaren Datenverarbeitungsgerät (7) entgegennimmt und an die elektronische Maschinensteuerung (2) weiterleitet.

10. Werkzeugmaschine mit einer elektronischen Maschinensteuerung (2) und einem Sende- und Empfangsmodul (4), das mit einer Schnittstelle der Maschinensteuerung (2) verbunden ist, um bestimmte Zustandsparameter der Werkzeugmaschine (1) auszulesen,
**dadurch gekennzeichnet,**
**dass** das Sende- und Empfangsmodul (4) einen App-Server oder einen Webserver beinhaltet, der die aus der elektronischen Maschinensteuerung (2) ausgelesenen Parameter für ein Anwendungsprogramm (App) oder für einen Webbrowser eines tragbaren Datenverarbeitungsgeräts (7) verfügbar und darstellbar macht.

11. Werkzeugmaschine nach Anspruch 10, wobei das Sende- und Empfangsmodul (4) solcherart mit der Schnittstelle der elektronischen Maschinensteuerung (2) verbunden ist, dass zusätzlich zum Auslesen von Zustandsparametern die Übermittlung von Steuerbefehlen an die Maschinensteuerung (2) möglich ist.

12. Werkzeugmaschine nach einem der Ansprüche 10 oder 11, wobei das Sende- und Empfangsmodul (4) als Teil der elektronischen Maschinensteuerung (2) oder als in die Maschinensteuerung (2) integrierter virtueller Rechner ausgeführt ist.

13. Sende- und Empfangsmodul mit einer Schnittstelle für eine elektronische Maschinensteuerung (2) einer Werkzeugmaschine (1), um bestimmte Zustandsparameter der Werkzeugmaschine (1) auszulesen,
**dadurch gekennzeichnet,**
**dass** es einen App-Server oder einen Webserver beinhaltet, der die aus der elektronischen Maschinensteuerung (2) ausgelesenen Parameter für ein Anwendungsprogramm (App) oder für einen Webbrowser eines tragbaren Datenverarbeitungsgeräts (7) verfügbar und darstellbar macht.

14. Sende- und Empfangsmodul nach Anspruch 13, das mit der Schnittstelle der elektronischen Maschinensteuerung (2) verbindbar ist, um zusätzlich zum Auslesen von Zustandsparametern die Übermittlung von Steuerbefehlen an die Maschinensteuerung (2) zu ermöglichen.

15. Sende- und Empfangsmodul nach einem der Ansprüche 13 oder 14, das als Teil einer elektronischen Maschinensteuerung (2) einer Werkzeugmaschine (1) oder als in eine solche Maschinensteuerung (2) integrierter virtueller Rechner ausgeführt ist.
